# EUROPEAN PATENT APPLICATION

(11) **EP 0 744 627 A1**
(43) Date of publication of application: **27.11.1996**
(21) Application number: 96303568.8
(22) Date of filing: 20.05.1996
(51) Int. Cl.: G01S 13/02

(54) **Transponder system for the remote communication of a physical condition**

(30) Priority: 25.05.1995 US 450067
(71) Applicant: Palomar Technologies Corporation, Carlsbad, California 92009 (US)
(72) Inventor: Lowe, Peter R., Colorado Springs, Colorado 80908 (US)
(74) Representative: Pratt, Richard Wilson

(57) **Abstract**

A transponder communicates information on a physical condition to a remote location, without the need for a local power supply or any wire or optical communications with the remote location, by detecting the physical condition and encoding information on the condition into a reprogrammable portion of the transponder memory for transmission in response to an interrogation signal. The encoder is preferably formed from an oscillator that provides an output signal whose frequency is a function of the information provided by the detector, and a counter that accumulates a count which is a function of the oscillator frequency, with the counter programming the memory in accordance with its accumulated count. A variable capacitor, resistor or inductor is preferably used to detect the physical condition and vary the oscillator's output frequency. A bubble wrap-type variable capacitor is particularly useful for monitoring the quantity of air within a tire.

## Description

This invention relates to transponder systems, and more particularly to transponder systems which can be used to detect a physical condition at a remote location.

Numerous attempts have been made to measure physical conditions, such as the pressure or volume of air within a tire or the temperature of either a mechanical element such as a moving fan belt or of a human or other animal, at a remote location that cannot be reached by electrical wire and has no local electrical power source. Such attempts have included conventional radio telemetry and optical systems. However, these approaches have proven to be relatively high in expense and/or low in performance.

One technology that has been used to communicate with a remote location is radio frequency (RF) transponders. A transponder is commonly used to identify, or at least indicate the presence of, an object to which the transponder is attached. Such systems typically employ an exciter/receiver that transmits an RF excitation (interrogation) signal, and a transponder that is energized by the excitation signal to transmit back an identification code. The transponders generally use a single antenna coil to both receive an excitation signal and to transmit back an identification signal; a system of this type is described in U.S. Patent No. 4,710,188 to Milheiser. Other transponders use separate receivers and transmit antennae.

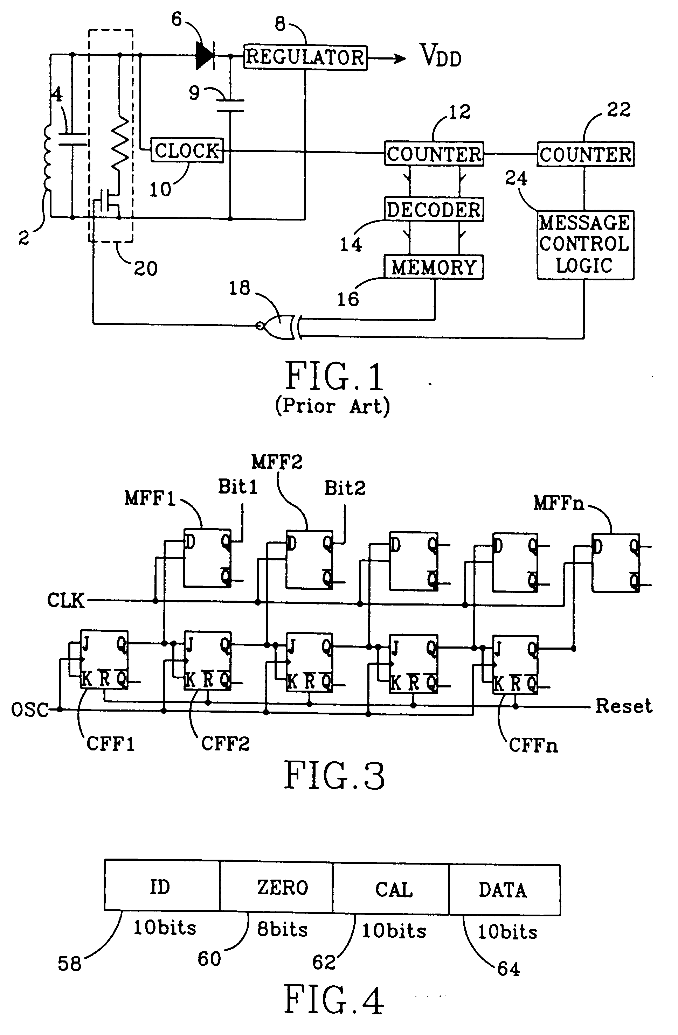

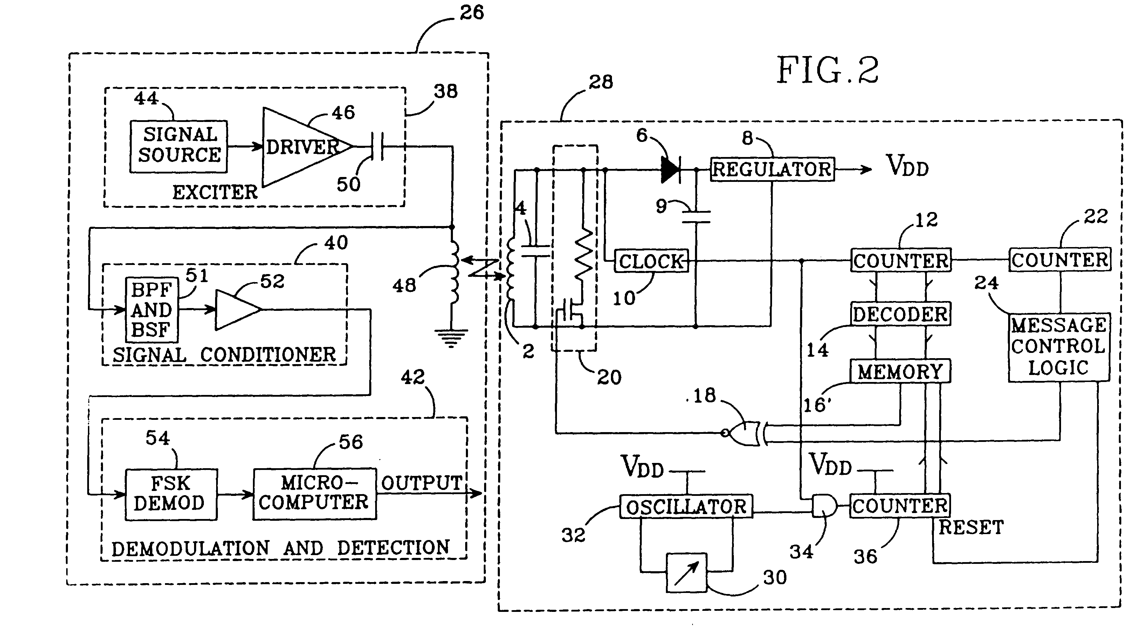

The general type of transponder circuitry used in systems such as the Milheiser patent is illustrated in FIG. 1. A parallel-resonant antenna coil circuit, consisting of a coil 2 in parallel with a capacitor 4 (in some cases the parasitic capacitance of coil 2 may provide the capacitance required for resonation without the use of a separate capacitor), receives an interrogation signal from an exciter/ receiver (not shown) and provides an input to a rectifier 6 and a shunt regulator circuit 8. Although illustrated as a single diode, the rectifier 6 is preferably a full-wave bridge rectifier. In combination with the regulator circuit, it provides positive (V_{DD}) and negative, or positive and ground, supply levels for the remainder of the transponder circuitry. A capacitor 9 at the rectifier output reduces ripple.

A clock 10, typically operating at a clock rate of 125 KHz, causes a counter 12 to count up at the clock rate. The counter output is connected to a decoder circuit 14, which includes the serial address logic for a memory 16, typically a serial EEPROM. The memory stores an identification code for the transponder and outputs the digital code to one input of an exclusive NOR gate 18 when the counter 12 has reached a predetermined count. The data output from the memory is typically encoded into a Manchester format. A synch character different in format from the encoded identification data inserted at the beginning of the frame, and the composite signal is then encoded in a frequency shift key (FSK) format before being applied to the gate 18. The FSK identification code is applied to the antenna coil 2 via a field effect transistor (FET)/resistor circuit 20 connected in parallel with the antenna. The transmission from antenna 2 is detected by the exciter/receiver to provide a response to the interrogation signal. The identification code can be programmed into the memory 16 either by physical contact or, with more recent transponders, by an RF transmission.

The counter 12 provides an output to another counter 22 which is used to drive the message control logic 24. The message control logic provides a frame for the message stream such that a Manchester code violation occurs for the first four bits of the message. This code violation is interpreted by the reader as the beginning of a frame. The messages are produced continuously as long as the tag is energized, with the outputs from memory 16 and message control logic 24 gated through an exclusive NOR gate 18.

While the described transponder has been found to be very useful in transmitting a static identification code from a remote location that does not have a local power supply and is not readily accessible by wire, it is incapable of providing information about a local physical condition that is subject to dynamic changes.

The present invention seeks to provide an inexpensive, reliable and high performance system for communicating information about a dynamically varying physical condition from a remote location, without requiring a local power supply, wire connections or even a visible line of sight.

These goals are accomplished by configuring a transponder to dynamically store information concerning a physical condition in its memory, and to transmit that information along with any desired identification code as part of the transponder's response signal. The transponder includes a transponder circuit that is energized by an interrogation signal to transmit a response signal from its memory, a detector that detects the desired physical condition, and an encoder that receives information from the detector concerning the physical condition and encodes that information into the memory for transmission in the response signal. The transponder's energizing circuit that powers the transponder circuitry also provides a local power supply for the encoder.

The memory is preferably a digital memory that is at least partially reprogrammable, with the encoder connected to program the reprogrammable portion of the memory with information concerning the physical condition that has been converted from an analog to a digital format. The memory also preferably includes a non-reprogrammable portion that stores both a transponder identification code, and a calibration code used to calibrate the detector.

The encoder preferably consists of an oscillator that is interconnected with the detector to provide an output signal whose frequency is a function of the information concerning the physical condition that has been provided by the detector, and a counter that is connected to the oscillator to accumulate a count that is a function of the oscillator frequency. The counter is connected to program the memory with an information code that is a function of its accumulated count, and thus of the detected physical condition. A clock with a clock rate substantially lower than the oscillator's output frequency is connected to terminate the counter's accumulation after a predetermined clock period. The detector preferably provides information on the physical condition in the form of a variable capacitance, resistance or inductance that is connected in circuit with the oscillator to vary its output frequency. A preferred form of variable capacitance is a bubble wrap-type member with capacitor electrodes on its opposed walls; this type of detector is particularly suited for providing an indication of the amount of air within a tire.

These and other objects and features of the invention will be apparent to those skilled in the art from the following detailed description, take together with the accompanying drawings.
FIG. 1 is a partially block and partially schematic diagram of a prior transponder, described above;
FIG. 2 is a partially block and partially schematic diagram of a transponder system in accordance with the invention, including both a transponder and an exciter/receiver;
FIG. 3 is a block diagram of a reprogrammable memory that can be used to store information on a physical condition, and a counter circuit which inputs the information into the memory;
FIG. 4 is a map of an preferred overall memory organization;
FIG. 5 is a fragmentary plan view of a variable capacitance detector that can be used to provide information on gas pressure or quantity;
FIG. 6 is a sectional view taken along section line 6-6 of FIG. 5;
FIG. 7 is a sectional view of a tire wheel upon which a transponder is mounted to provide information on the amount of air within the tire;
FIG. 8 is a fragmentary sectional view of a transponder antenna seated in a groove in a mounting tube on the wheel; and
FIG. 9 is a fragmentary plan view showing a possible disposition of the transponder circuitry in the tube.

The invention uses a transponder system to detect a desired physical condition at a remote location that does not have a local power supply. Even if the remote location is accessible by wire or optically, the invention provides a communication link that is generally less expensive and/ or has a better performance. Transponders have the advantage of being relatively small and quite durable, and can be attached to a moving fan belt to sense its temperature, mounted on a wheel to sense the amount of air within a tire, buried under the skin of a human or animal to monitor its temperature (such as monitoring a milking cow's body temperature as it enters a milking parlor to reject the milk if the temperature is elevated by disease), or used in other difficult applications.

FIG. 2 shows a preferred embodiment for the transponder system, which includes an exciter/receiver 26 and a transponder 28. The exciter/receiver transmits an RF interrogation signal that is received by the transponder and used to actuate the transmission of a response signal that includes information on the desired physical condition. The response signal is received and decoded by the exciter/ receiver, which thus functions as a transceiver. Although it preferably uses a single antenna for both transmission and reception, these transceiver functions can be separated and even provided at different locations if desired.

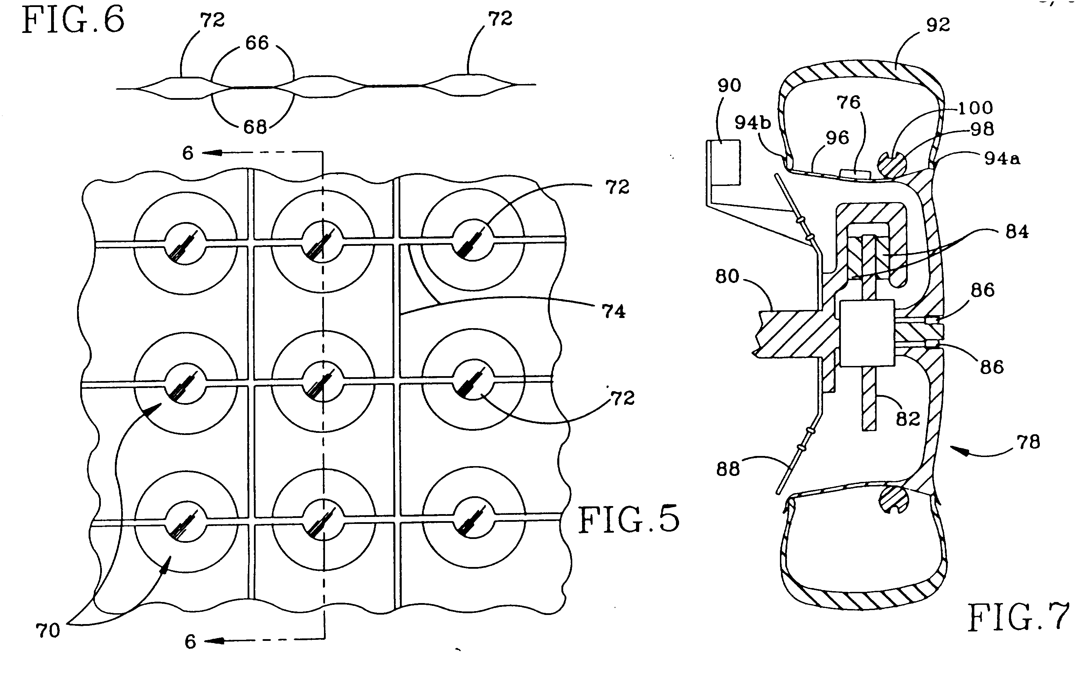

The transponder 28 builds upon the prior transponder illustrated in FIG. 1, and common elements are identified by the same reference numbers. A detector 30 is provided in association with the transponder and is used to monitor a desired physical condition. Although the detector is indicated as being included within the transponder 28, it may physically be located off of the substrate used for the transponder circuitry. The detector preferably provides an output in the form of a variable electrical characteristic, such as capacitance, resistance or inductance, that varies as a function of the physical phenomenon being monitored. For example, relative changes in ambient pressure could be detected by a flexible enclosure that expands or contracts in response to pressure changes, with capacitor electrodes on opposed walls of the enclosure moving further apart or coming closer together as the enclosure expands or contracts, in effect providing a variable capacitor; a preferred implementation of this type of detector is discussed below in connection with FIGs. 5 and 6. A variable resistance could be implemented with a thermistor used to measure temperature, a linear potentiometer used to detect a physical movement, or a shaft-mounted potentiometer whose resistance varies with rotational speed. Similarly, an inductance coil could be connected to an object whose movement is to be measured, with the coil either compressed or stretched out as the object moves and varies its inductance. A phototransistor could also be connected in various types of circuits to provide a variable electrical characteristic in response to changes in light intensity.

The detector 30 is connected in circuit with a variable frequency oscillator 32, and varies the oscillator's output frequency as a function of the detector's varying electrical characteristic. Variable frequency oscillators, such as the Motorola SN 74LS724 Voltage Controlled Oscillator, are well known. Since the oscillator is free running and the detector's electrical characteristic varies as a function of the physical condition being monitored, the oscillator's output frequency will also be a function of that physical condition.

The oscillator's output is applied through an AND gate 34 to the input of a counter 36; a second input to the AND gate receives a signal whose frequency is significantly lower than the oscillator's output frequency. This second AND gate input may conveniently be provided by the clock 10 that is already part of the transponder circuit. The oscillator frequency is chosen to be high compared to the enabling clock frequency. For example, the oscillator frequency may be on the order of 50 MHz in a system with an enabling frequency of 125 KHz. With this example 400 pulses are counted into the counter 36 during each enabling clock period, and the counter can conveniently be implemented by nine flip-flop circuits (2⁹=512). The power supply for both the oscillator and the counter is the same V_{DD} provided to the remainder of the transponder circuitry by the rectifier 6 and regulator 8.

The transponder memory is modified from that shown in FIG. 1 so that it includes a reprogrammable portion that receives and stores the count held by counter 36 as an indication of the present state of the physical condition being monitored. This reprogrammable memory section can be either volatile, in which data must be constantly reapplied or refreshed and in which data are erased when power is no long applied, or static, which does not need to be refreshed but which loses its data when power is no longer applied. The reprogrammable memory section contrasts with the portion of the memory devoted to the transponder's identification code, which once programmed retains the identification code regardless of the termination of supply power. The modified memory is indicated by reference number 16' in FIG. 2.

In response to an actuation by counter 12, the physical condition data stored in the memory 16' is read out along with any identification code stored in the memory. The readout can be encoded in various ways, preferably FSK, and transmitted as a response signal in the same way as with prior transponders.

Various available exciter/receivers can be used, depending upon the desired operating range and frequency. A suitable exciter/receiver for short range applications is the MINIPROX® reader by Hughes Identification Devices, Inc., which can be mechanically reconfigured for mounting in various types of environments. This particular exciter/ receiver has three main functional units: an exciter 38, signal conditioner 40 and demodulation and detection circuit 42. The exciter 38 consists of an AC signal source 44, followed by a power driver 46 which provides a high current, high voltage excitation signal to an interrogator antenna coil 48 through a capacitor 50. The interrogator coil 48 and the capacitor 50 are selected to resonate at the excitation signal frequency, so that the voltage across the coil is much greater than the voltage output from the driver.

The signal conditioner 40 connects to the interrogator coil 48 and serves to amplify the response signal returned from the transponder, while filtering out the excitation signal frequency as well as other noise and undesired signals outside the frequency range of the transponder signals. It includes a bandpass filter/bandstop filter 51 that actively passes the response signal frequencies returned from the transponder and passively excludes the high energy at the excitation frequency, and an amplifier 52.

The amplified output of the signal conditioner 40 is fed to the demodulation and detection unit 42, which includes a FSK demodulator 54 and a microcomputer 56. The FSK demodulator 54 is a phase-locked loop circuit configured as a tone decoder which gives a digital output as a signal from the transponder shifts between two frequencies. The microcomputer 56 extracts the detector information plus any identification code from this digital output by observing the timing of transitions between the two logic levels. The information obtained by the microcomputer 56 can be transferred to a display or printer, sent over communication lines to a remote point, stored on tape, disk or other storage medium, or sent to another computer.

A preferred organization for the oscillator counter 36 and the reprogammable of memory 16' is given in FIG. 3. The reprogrammable portion of the memory is implemented by a row of "D" type memory flip-flop circuits MFF1, MFF2, MFFn; the counter 36 is implemented by a row of "JK" type counter flip-flop circuits CFF1, CFF2, ..., CFFn. Only 5 bits are illustrated, although normally there would be more. A clock signal CLK generated by the message control logic is applied to the clock input of each memory flip-flop, while the gated output OSC from the oscillator 32 is applied to each of the counter flip-flops. Each counter flip-flop has its J and K inputs tied together, with a Q output connected to the J and K inputs of the next counter flip-flop in sequence and to the D input of a corresponding memory flip-flop. The Q outputs of the memory flip-flops represent the various reprogrammable memory bits. A counter reset line from the message control logic is also shown.

Other types of converters could also be used to convert the detector's analog variable electrical characteristic to a digital format, but conventional analog-to-digital converters are generally low impedance devices that consume much more power than the oscillator/counter circuit shown in FIGs. 2 and 3.

The transponder chip's memory 16' may also be used to store correction information to compensate for manufacturing variations and the like in the analog portion of the detector. This is illustrated in FIG. 4, which shows an exemplary organization for memory 16'. The first memory section 58, typically 10 bits, is non-reprogrammable and reserved for a conventional transponder identification code. The second and third memory sections 60 and 62 are also non-reprogrammable and respectively contain a zero setting and calibration values for the system; section 60 is typically 8 bits and section 62 10 bits. The fourth memory section 64, typically 10 bits, is reprogrammable and holds the variable data which is the present value of the physical condition being monitored. The identification code, zero setting and calibration values can all be written into the non-reprogrammable portion of the memory at the same time if desired.

The system can be calibrated by first applying some fixed and known low value of the physical condition to the system and placing that value into the zero memory section 60. The system is then subjected to a known high value of the physical condition, and that value is placed in the calibration memory section 62. These values remain in the memory permanently, or at least until it is recalibrated. The values are also programmed into the microcomputer 56 in the reader/exciter, which provides the necessary corrections to the present value of the physical condition for the life of the system.

FIGs. 5 and 6 illustrate a form of variable capacitor that can be used for the detector 30, and is particularly suitable for monitoring the amount of air in a tire. It consists of a bubble wrap-type member which has flexible undulating opposed walls 66 and 68 of a non-conductive material, preferably a polycarbonate such as polyester that is stable at high temperatures and easy to plate onto. The opposed walls form an array of "bubble" cells 70. A pattern of conductive material is printed on the outer surfaces of the opposed walls, preferably expanding into capacitor "plates" 72 at the center of each bubble, with the various plates in the array on each side of the detector connected by conductive lines 74 so that each side of the bubble wrap in effect constitutes an overall capacitor plate. A fixed quantity of gas is sealed inside each bubble during the manufacturing process to establish a bubble volume and associated capacitor plate spacing that varies in a negative fashion with the ambient pressure outside the bubble wrap. Specifically, when the ambient pressure goes up the opposed capacitor plates are squeezed together, and when the pressure drops the bubbles expand and move the opposed plates further apart. In this manner the overall capacitance of the bubble wrap member is a function of the ambient pressure or, more precisely of the differential between the ambient pressure and the pressure within the bubbles.

A transponder with a bubble wrap-type variable capacitor is particularly useful for monitoring the quantity of air within a tire. This application is illustrated in FIG. 7, in which a transponder unit 76 of this type is shown mounted on the periphery of a wheel within a standard wheel assembly 78. The wheel assembly includes a vehicle axle 80, a brake rotor 82 and calipers 84, and a set of wheel nuts 86 that hold the wheel onto the axle. A splash guard 88 is positioned on the vehicle side of the wheel assembly to protect the calipers and rotor from water and dirt. An RF exciter/reader 90 can be mounted to the splash guard adjacent the wheel assembly, or at any other convenient location on the vehicle which carries the wheel. Alternately, the exciter/reader can be placed at a fixed location off the vehicle to interrogate the wheels of passing vehicles. A tire 92 is mounted to the wheel between peripheral wheel rims 94a and 94b, with the transponder 76 mounted on the wheel periphery 96 within the tire.

The transponder antenna 2 can be held in a flexible resilient tube 98 that extends around the wheel periphery, as described in U.S. patent application Serial No. 08/173, 381 filed December 22, 1993 by the present inventor and William E. Armstrong. The tube includes a peripheral groove 100 that extends into its outer surface, with the antenna 2 seated within the groove 100 and extending substantially all the way around the tube. Depending upon the application, the transponder antenna can either be single turn or multi-turn. The tube is formed from a material, such as foam rubber or elastomer, that is flexible enough to be stretched out and passed over the outer wheel rim 94a when the tube is mounted, and resilient enough to thereafter seat the tube in place around the wheel periphery. The tube is preferably configured so that groove 100 extends above the height of the wheel rim 94a, thereby enhancing RF access to the transponder antenna.

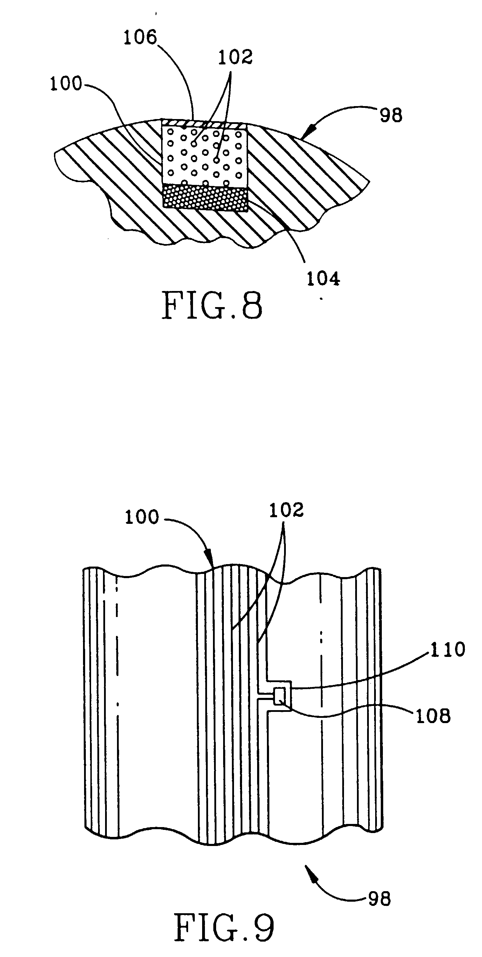

FIG. 8 illustrates a multi-turn transponder antenna in which the antenna wire 102 (generally copper) is wound in multiple turns within the groove 100. Reinforcing cords 104, formed from a material such as Dacron® or nylon string, can be wound around the base of the groove 100 to protect the antenna coil, while a sealant 106 is applied over the outermost coils.

A transponder circuit chip and/or detector can also be lodged in the tube 98, as shown in FIG. 9. An integrated circuit (IC) chip 108 is shown lodged in a recess 110 in the outer tube surface that opens into the groove 100. The chip 108 is connected to the antenna coil 102, and is actuated by an RF interrogation signal from the exciter/receiver 26 to transmit information back to the exciter/receiver through the same coil 102.

Since the antenna wire is generally not deformable, the inner diameter of the tube groove 100 is made slightly larger than the diameter of the outer wheel rim 94a. This allows the tube to be slipped over the rim without unduly stressing the antenna. The tube is preferably formed from a material that is quite deformable, such as a low density foam, so that the portion of the tube below the groove easily deforms and passes over the wheel rim when the tube is mounted.

In operation, the variable capacitance bubble wrap-type detector senses the difference between the tire pressure and the pressure within the bubbles, and this information is transmitted by the transponder to the exciter/ reader 90 in response to an interrogation signal. The information can be shown on a continuous display within the vehicle, or used to excite an alarm when the value is too low (or too high).

A particular advantage of this system is that it is relatively insensitive to temperature changes. If the temperature within the tire were constant, the detector would provide a pressure readout. However, since tire pressures vary considerably because of both changes in ambient temperature and vehicle use, the actual pressure within the tire at any given time will actually be a function of both the quantity of air within the tire and its temperature. But temperature changes within the tire which effect the tire pressure also modify the gas pressure within each of the detector bubbles in a similar fashion. Accordingly, temperature-induced pressure changes within the tire and detector tend to cancel each other out, and the detector provides an indication of the actual quantity of air within the tire, rather than its pressure. This is exactly what is desired. The quantity of air within the tire, rather than its absolute pressure at any given time, is the more important consideration in deciding whether the air within the tire needs to replenished. Instead of attempting to compensate for temperature-induced pressure changes by waiting until the tire is "cold" before measuring its air pressure, an accurate monitoring of changes in the quantity of air within the tire is automatically achieved both while the vehicle is running and after the tires have been allowed to cool.

While several illustrative embodiments of the invention have been shown and described, numerous variations and alternate embodiments will occur to those skilled in the art. Such variations and alternate embodiments are contemplated, and can be made without departing from the spirit and scope of the invention as defined in the appended claims.

## Claims

1. A transponder for communicating information on a physical condition to a remote location, comprising:
a transponder circuit that includes a memory and is energized in response to an interrogation signal to transmit a response signal from said memory,
a detector for detecting a physical condition, and
an encoder arranged to receive information from said detector concerning the physical condition and to encode said information into said memory for transmission in the response signal.

2. A transponder for communicating information on a physical condition to a remote location, comprising:
an antenna for receiving a radio frequency (RF) interrogation signal,
a rectifier connected to said antenna to provide a power supply for said transponder in response to a received interrogation signal,
a clock which provides a clock signal,
a first counter which counts up in response to said clock signal,
a memory which is at least partially reprogrammable,
a decoder connected to be clocked by said first counter and in response to enable a readout from said memory,
an output circuit which applies a readout from said memory to said antenna for transmission as a response signal,
a detector for detecting a physical condition, and
an encoder arranged to receive information from said detector concerning said physical condition and to program the reprogrammable portion of said memory with said information for inclusion in said response signal.

3. The transponder of claim 2, wherein said encoder comprises an oscillator that is interconnected with said detector to provide an output signal whose frequency is substantially higher than said clock frequency and is a function of the information concerning said physical condition provided by said detector, and a second counter that is connected to said oscillator to accumulate a count that is a function of the oscillator frequency, said second counter also being connected to program said memory with a code that is a function of said accumulated count.

4. The transponder of claim 3, wherein said clock is connected to terminate said second counter's accumulation after a period of said clock signal.

5. The transponder of claim 2 or 3, wherein said memory includes a non-reprogrammable portion for storing a transponder identification code, so that said identification code is read out along with the code from said second counter and included in said response signal in response to clocking by said first counter.

6. A system for sensing a physical condition from a remote location, comprising: a radio frequency (RF) transceiver for transmitting an RF interrogation signal, and a transponder at a remote location from said transceiver, said transponder comprising: a transponder circuit that includes a memory and is energized in response to an interrogation signal to transmit a response signal from said memory,
a detector for detecting a physical condition, and
an encoder arranged to receive information from said detector concerning the physical condition and to encode said information into said memory for transmission in the response signal,
said transceiver including a receiver section for receiving and decoding a response signal from said transponder.

7. The transponder or system of claim 1 or 6, said transponder circuit including a power supply line and an energizing circuit which energizes the power supply line in response to an interrogation signal, said power supply line providing a power supply for said encoder.

8. The transponder or system of claim 1, 6 or 7, wherein said detector provides information concerning said physical condition in an analog form and said encoder encodes said information into a digital format.

9. The transponder or system of claim 8, said memory comprising a digital memory that is at least partially reprogrammable, wherein said encoder is connected to program said memory with said digitally formatted information, and said transponder circuit reads out said information from said memory for inclusion in said response signal.

10. The transponder or system of claim 1, 6 or 9, said memory comprising a digital memory that is at least partially reprogrammable, and said encoder comprising an oscillator that is interconnected with said detector to provide an output signal whose frequency is a function of the information concerning said physical condition provided by said detector, and a counter that is a function of the oscillator frequency, said counter also being connected to program said memory with an information code that is a function of said accumulated count, said transponder circuit reading out said information code from said memory for inclusion in said response signal.

11. The transponder or system of claim 2, 5, 9 or 10, wherein said memory includes a non-reprogrammable portion for storing a transponder identification code, and said transponder circuit reads out a transponder identification code stored in said non-reprogrammable portion along with said information for inclusion in said response signal.

12. The transponder or system of claim 11, wherein part of the non-reprogrammable portion of said memory is reserved for a calibration code for calibrating said detector, with a calibration code stored in said part of the memory read out from the memory for inclusion in said response signal.

13. The transponder or system of claim 10, 11, or 12 said transponder circuit including a clock that has a clock rate substantially lower than any output frequency of said oscillator and that is connected to terminate said counter's accumulation after a predetermined clock period.

14. The transponder or system of claim 10, 11, 12 or 13, said detector including a variable capacitor that has a capacitance which varies as a function of the detected physical condition and that is connected in circuit with said oscillator to vary the oscillator's output frequency as a function of the value of said capacitance.

15. The transponder or system of claim 10, 11, 12 or 13, said detector including a variable resistor that has a resistance which varies as a function of the detected physical condition and that is connected in circuit with said oscillator to vary the oscillator's output frequency as a function of the value of said resistance.

16. The transponder or system of claim 10, 11, 12 or 13, said detector including a variable inductor that has an inductance which varies as a function of the detected physical condition and that is connected in circuit with said oscillator to vary the oscillator's output frequency as a function of the value of said inductance.

17. The transponder or system of any one of claims 1 to 14, said detector comprising a bubble wrap-type member having flexible undulating opposed walls of a non-conductive material and enclosing a gas between said walls, and opposed capacitor electrodes on at least a portion of said opposed walls which establish a detector capacitance that varies as a function of the spacing between said electrodes, said opposed walls moving relative to each other in response to a change in the ambient pressure around said detector to adjust the spacing between said opposed capacitor electrodes and thereby adjust the detector's capacitance, wherein said encoder encodes information onto the response signal as a function of the detector capacitance.

18. The transponder or system of claim 17, further comprising a tire with said transponder mounted inside the tire to provide an indication of the amount of air within the tire.

19. The system of claim 17, further comprising a tire with said transponder mounted inside the tire and said transceiver located outside the tire, said transponder transmitting a response signal which provides information on the amount of air within said tire in response to an interrogation signal from said transceiver.

20. The transponder or system according to any preceding claim, wherein said transponder circuit transmits a response signal which includes a transponder identification code in response to an interrogation signal.
